# FASCICULE DE BREVET EUROPEEN

(11) **EP 3 517 756 B1**
(45) Date de publication et mention de la délivrance du brevet: **25.08.2021**
(21) Numéro de dépôt: 18159510.9
(22) Date de dépôt: 26.06.2009
(51) Int. Cl.: F02B 75/04, F02B 75/32, F01B 9/04, F02D 15/02, F16K 11/056, F16K 11/10, F16K 15/18, F16K 31/124

(54) **MOTEUR À TAUX DE COMPRESSION VARIABLE AVEC DISPOSITIF DE LEVÉE DE BILLE À VIS**
MOTOR MIT VARIABLEM VERDICHTUNGSVERHÄLTNIS MIT HUBVORRICHTUNG MIT KUGELGEWINDETRIEB
VARIABLE COMPRESSION-RATIO ENGINE WITH BALL-SCREW LIFT DEVICE

(30) Priorité: 27.06.2008 FR 0803615; 27.06.2008 US 76364
(43) Date de publication de la demande: 31.07.2019
(62) Demande divisionnaire de: 09769465.7
(73) Titulaire: Rabhi, Vianney, 69006 Lyon (FR); MCE-5 Development, 69003 Lyon (FR)
(72) Inventeur: RABHI, Vianney, 69006 Lyon (FR)
(74) Mandataire: IP Trust

(56) Documents cités:
- DE-A1-102005 010 098
- FR-A- 997 725
- FR-A- 2 131 412
- FR-A- 2 896 539

## Description

La présente invention est relative à un moteur à taux de compression variable comprenant un dispositif de réglage du taux de compression muni d'un dispositif de levée de bille à vis comprenant au moins un moteur électrique rotatif prévu pour entraîner en rotation au moins une vis permettant de lever ou de déposer de son siège au moins une bille ou clapet d'un vérin de commande qui permet de contrôler le taux de compression dudit moteur à taux de compression variable.

La bille est prévue pour obturer l'une ou l'autre extrémité d'un canal de transfert reliant la chambre supérieure et inférieure du vérin de commande qui, lorsqu'elle est maintenue par un ressort sur son siège, agit comme un clapet anti-retour, afin de ne laisser passer le fluide hydraulique que dans un sens.

On connaît, d'après les brevets internationaux WO98/51911, WO00/31377, WO03/008783 appartenant au demandeur, différents dispositifs mécaniques pour moteur à cylindrée variable.

On remarque que le brevet international WO98/51911 au nom du demandeur décrit un dispositif servant à améliorer le rendement des moteurs à combustion interne à pistons utilisés à charge et régime variables par adaptation en marche de leur cylindrée effective et/ou de leur rapport volumétrique. Ce type de moteur étant connu de l'homme de l'art sous la dénomination de « moteur à taux de compression variable », cette dénomination sera retenue dans le texte qui suit.

On constate que selon le brevet international WO00/31377 au nom du demandeur, le dispositif de transmission mécanique pour moteur à taux de compression variable comprend un piston de combustion, solidaire dans sa partie inférieure d'un organe de transmission, coopérant d'une part avec un dispositif de guidage à roulement, et d'autre part avec une roue dentée solidaire d'une bielle permettant de réaliser la transmission du mouvement entre ledit piston et ladite bielle.

On note que selon le brevet international WO03/008783 au nom du demandeur le dispositif de transmission mécanique pour moteur à taux de compression variable comprend au moins un cylindre dans lequel se déplace un piston de combustion qui est solidaire, dans sa partie inférieure, d'un organe de transmission dit aussi « crémaillère de piston » coopérant d'une part au moyen d'une crémaillère de faible dimension avec un dispositif de guidage à roulement, et d'autre part au moyen d'une autre crémaillère de forte dimension avec une roue dentée solidaire d'une bielle. Ledit dispositif de transmission mécanique pour moteur à taux de compression variable comprend également au moins une crémaillère de commande coopérant avec la roue dentée, des moyens de fixation du piston de combustion sur l'organe de transmission qui offrent une précontrainte de serrage, des moyens de liaison qui permettent de rigidifier les dents des crémaillères, et des moyens de renforcement et d'allégement de la structure de la roue dentée.

On note que le jeu minimal de fonctionnement entre les dentures des crémaillères de forte dimension et celles de la roue dentée est fixé par la localisation de surfaces de roulement réalisées sur lesdites crémaillères de forte dimension et sur ladite roue dentée.

On remarque que selon la demande de brevet FR 2 896 544 le moteur à taux de compression variable comprend une culasse commune qui coopère avec un carter cylindres pour fermer, d'une part l'extrémité d'au moins un cylindre du moteur au niveau de sa chambre de combustion et d'autre part, l'extrémité d'au moins un cylindre d'un vérin de commande dudit moteur au niveau de la chambre supérieure dudit vérin, ledit carter cylindres contenant l'ensemble des composants de l'attelage mobile du moteur à rapport volumétrique variable.

On note que selon la demande de brevet FR 2 896 539 le moteur à taux de compression variable possède au moins un vérin presseur qui permet aux surfaces de roulement de rester en permanence en contact entre elles afin de maîtriser les émissions acoustiques dudit moteur et d'augmenter les tolérances de fabrication de son carter cylindre, ledit moteur à taux de compression variable possédant autant de vérins presseurs et de vérins de commande qu'il possède de cylindres.

On note également que selon les brevets WO98/51911 et FR 2 896 539, la position verticale de la crémaillère de commande du moteur à taux de compression variable est contrôlée par un vérin de commande qui comporte une entrée de fluide hydraulique sous pression prévue pour compenser d'éventuelles fuites dudit vérin de commande, et pour assurer une pression de pré charge visant à augmenter la précision de maintien de la consigne en position verticale dudit vérin de commande en réduisant les effets de la compressibilité de l'huile, et visant à éviter tout phénomène de cavitation à l'intérieur des chambres dudit vérin.

On remarque dans le brevet WO98/51911 que le vérin de commande comporte une chambre inférieure et une chambre supérieure dont la cylindrée est maintenue identique à celle de ladite chambre inférieure grâce à un prolongateur d'axe de vérin également appelée tige supérieure de vérin. Toujours selon le brevet WO98/51911 le vérin de commande comprend également un piston de vérin, des valves maintenues en place par des ressorts, et une tige de contrôle, l'extrémité supérieure dudit vérin étant fermée par une culasse qui comporte des moyens d'étanchéité entre ladite culasse et ladite tige supérieure de vérin d'une part et entre ladite culasse et ladite tige de contrôle d'autre part.

Comme revendiqué dans les demandes de brevet français FR 2 896 539 et FR 07/05237 au nom du demandeur, le moteur à taux de compression variable comporte une centrale hydraulique prévue d'une part, pour fournir à son ou ses vérin(s) presseur(s) la pression hydraulique nécessaire à leur fonctionnement, et d'autre part, pour fournir à son ou ses vérin(s) de commande la pression hydraulique nécessaire à la compensation de leurs éventuelles fuites hydrauliques et à l'augmentation de leur précision. On note que ladite centrale est alimentée en huile par le circuit de lubrification du moteur via une pompe haute pression pouvant être entraînée par l'un quelconque des arbres à cames du moteur à taux de compression variable, ladite centrale alimentant ensuite le ou les vérin(s) de commande et le ou les vérin(s) presseur(s) dudit moteur.

On remarque, selon la demande de brevet français FR 2 896 539 ou WO2007/085739 au nom du demandeur, que la pression hydraulique fournie au vérin de commande peut également servir à augmenter la vitesse de déplacement dudit vérin de commande lors des manœuvres visant à augmenter le rapport volumétrique du moteur à taux de compression variable. Selon cette dernière variante, ladite pression hydraulique est appliquée sur la face supérieure de la tige supérieure du vérin de commande au moyen d'une chambre aménagée dans la culasse dudit vérin.

On constate que dans les demandes de brevets et brevets d'invention au nom du demandeur, la tige de commande peut avantageusement être remplacée par des électrovannes qui coopèrent avec au moins un capteur, de manière à simplifier la réalisation du système de commande du taux de compression du moteur à taux de compression variable.

Cependant, au vu de la difficulté que représente la réalisation d'électrovannes à la fois fiables, économiques et compatibles avec les impuretés et particules contenues dans l'huile de lubrification du moteur à taux de compression variable, il a été proposé dans la demande de brevet français FR 08/03589 au nom du demandeur de remplacer lesdites électrovannes par un dispositif de réglage du taux de compression à levée de bille qui comprend au moins deux billes ou clapets reposant chacune sur un siège et obturant respectivement l'une et l'autre extrémité d'un canal de transfert reliant la chambre supérieure et la chambre supérieure du vérin de commande du moteur à taux de compression variable, lesdites billes agissant comme un clapet anti-retour lorsqu'elles sont maintenues sur leur siège par un ressort afin de ne laisser passer le fluide hydraulique que dans un sens.

On voit dans cette dernière demande de brevet que lesdites billes peuvent être levées de leur siège par des moyens de levage pour laisser passer ledit fluide hydraulique dans les deux sens, lesdits moyens de levage levant lesdites billes par l'intermédiaire d'un poussoir cylindrique. Selon cette demande de brevet, les moyens de levage peuvent être constitués d'actionneurs électromécaniques réalisables selon diverses variantes, deux d'entre elles prévoyant deux hauteurs de levée desdites billes de leur siège, tandis qu'une autre en prévoit une levée incrémentale. Dans ladite demande de brevet, il est également revendiqué deux variantes utilisant des composants piézo-électriques, ainsi qu'une variante étagée qui comporte un piston permettant de manœuvrer en translation longitudinale le poussoir cylindrique, ledit piston pouvant utiliser la pression régnant dans la centrale hydraulique du moteur à taux de compression variable au moyen d'une électrovanne pour lever la bille de son siège.

Le dispositif de levée de bille à vis pour moteur à taux de compression variable est conçu pour résoudre un ensemble de problèmes liés au dispositif de réglage du taux de compression à levée de bille tel que décrit dans la demande de brevet français FR 08/03589 au nom du demandeur à laquelle il vient d'être fait référence, parmi lesquels :
- Les variantes à deux hauteurs de levée de bille ne permettent pas de faire varier la hauteur de levée de ladite bille en dehors des deux dites hauteurs de levée, hormis si les ventouses électromagnétiques prévues dans la demande de brevet sont alimentées en variation de tension électrique - par exemple en rapport cyclique d'ouverture - mais avec en ce cas une incertitude sur la hauteur réelle de levée de ladite bille ;
- La variante qui prévoit une levée incrémentale utilise le frottement existant entre le poussoir cylindrique et des lames métalliques anti-retour avec lesquelles il coopère, ce qui présente l'inconvénient d'une durabilité et d'une fiabilité difficile à assurer à cause de l'usure dudit poussoir et desdites lames ;
- La variante basée sur un empilement de couches piézo-électriques présente l'inconvénient d'une course de levée faible sauf à présenter un encombrement important, tandis que la variante basée sur un moteur piézo-électrique en « H » exposée présente la difficulté - comme c'est le cas pour la variante à levée incrémentale - de ne pas garantir un déplacement répétable et précis du fait de l'abrasion des parois entre lesquelles évolue ledit moteur piézo-électrique en « H » ;
- La variante basée sur piston pouvant utiliser la pression régnant dans la centrale hydraulique du moteur à taux de compression variable au moyen d'une électrovanne pour lever la bille de son siège présente l'inconvénient d'une impossibilité de contrôler la hauteur de levée de la bille.

C'est pour résoudre différents problèmes liés au dispositif de réglage du taux de compression à levée de bille pour moteur à taux de compression variable tel que décrit dans le brevet français FR 08/03589 cité en référence, que le dispositif de levée de bille à vis pour moteur à taux de compression variable propose :
- De contrôler la hauteur de levée de la bille en continu avec une grande précision;
- De prévenir tout phénomène d'usure qui soit de nature à affecter la précision ou la répétabilité de la hauteur de levée de ladite bille.

Le dispositif de levée de bille à vis d'un moteur à taux de compression variable comprenant un vérin de commande hydraulique à double effet comportant une chambre supérieure et une chambre inférieure et au moins un piston de vérin relié à une crémaillère de commande suivant la présente invention comprend :
- Au moins deux billes ou clapets reposant chacun(e) sur un siège et obturant respectivement l'une et l'autre extrémité d'un canal de transfert reliant la chambre supérieure et la chambre inférieure du vérin de commande, lesdites billes agissant comme un clapet anti-retour lorsqu'elles sont maintenues sur leur siège par un ressort afin de ne laisser passer le fluide hydraulique que dans un sens;
- Et des moyens de levage comprenant au moins un moteur électrique prévu pour entraîner en rotation au moins une vis permettant de lever ou de déposer de son siège au moins une bille.

Le dispositif de levée de bille à vis pour moteur à taux de compression variable suivant la présente invention comprend :
- Un vérin de commande dont le piston de vérin est fixé à la crémaillère de commande par une vis de serrage;
- Et au moins un clapet anti-retour de compensation permettant au fluide hydraulique de sortir du canal de transfert pour retourner dans une centrale hydraulique du moteur à taux de compression variable contenant une réserve sous pression dudit fluide, mais interdisant audit fluide de retourner dans ledit canal de transfert.

Le dispositif de levée de bille à vis pour moteur à taux de compression variable suivant la présente invention comporte des moyens de levage qui sont constitués d'un poussoir cylindrique logé dans le canal de transfert, et au moins un moteur électrique prévu pour entraîner en rotation au moins une vis permettant de manœuvrer en translation longitudinale ledit poussoir cylindrique afin que son extrémité vienne lever ou déposer de son siège au moins une bille.

Le dispositif de levée de bille à vis pour moteur à taux de compression variable suivant la présente invention comporte un moteur électrique rotatif qui entraîne la vis en rotation par l'intermédiaire de moyens de transmission mécanique.

Le dispositif de levée de bille à vis pour moteur à taux de compression variable suivant la présente invention comporte un moteur électrique rotatif entraînant simultanément en rotation deux vis permettant chacune de lever ou de déposer de leur siège une bille ou clapet, la première vis allant en direction d'une première bille lorsque la deuxième vis s'éloigne d'une deuxième bille et inversement, lesdites billes ne pouvant pas être levées simultanément de leurs sièges.

Le dispositif de levée de bille à vis pour moteur à taux de compression variable suivant la présente invention comporte un moteur électrique rotatif qui entraîne simultanément en rotation les deux vis au moyen d'au moins une roue dentée reliant ledit moteur aux dites vis.

Le dispositif de levée de bille à vis pour moteur à taux de compression variable suivant la présente invention comporte un moteur électrique rotatif qui entraîne simultanément en rotation les deux vis au moyen d'au moins une courroie crantée.

Le dispositif de levée de bille à vis pour moteur à taux de compression variable suivant la présente invention comporte un moteur électrique rotatif qui entraîne simultanément en rotation les deux vis au moyen d'au moins une chaîne.

Le dispositif de levée de bille à vis pour moteur à taux de compression variable suivant la présente invention comporte deux vis qui sont entraînées en rotation dans le même sens, la première vis présentant un pas inversé par rapport à celui de la deuxième vis.

Le dispositif de levée de bille à vis pour moteur à taux de compression variable suivant la présente invention comporte deux vis qui sont simultanément entraînées en rotation en sens inverse l'une de l'autre, la première vis étant vissée, tandis que la deuxième est dévissée et inversement.

Le dispositif de levée de bille à vis pour moteur à taux de compression variable suivant la présente invention comporte un moteur électrique rotatif qui est muni d'un capteur de position angulaire.

Le dispositif de levée de bille à vis pour moteur à taux de compression variable suivant la présente invention comporte un piston de vérin du vérin de commande hydraulique à double effet qui comprend deux butées élastiques de fin de course qui déterminent la course maximale dudit piston, la première butée élastique permettant de limiter le taux de compression maximal du moteur à taux de compression variable lorsqu'elle entre en contact avec le carter cylindres dudit moteur, la deuxième butée élastique permettant de limiter le taux de compression minimal du moteur à taux de compression variable lorsqu'elle entre au contact avec une culasse du vérin de commande dudit moteur.

Le dispositif de levée de bille à vis pour moteur à taux de compression variable suivant la présente invention comporte un piston de vérin du vérin de commande hydraulique à double effet fixé à la crémaillère de commande qui comprend entre la face inférieure dudit piston et la tige inférieure de vérin de la crémaillère de commande une rondelle de réglage qui permet de régler la position dudit piston par rapport à ladite crémaillère, de manière à pouvoir régler le taux de compression du moteur à taux de compression variable lorsque l'une ou l'autre des deux butées élastiques de fin de course entre en contact soit avec le carter cylindres dudit moteur s'agissant de la première butée, soit avec la culasse du vérin de commande dudit moteur s'agissant de la deuxième butée.

Le dispositif de levée de bille à vis pour moteur à taux de compression variable suivant la présente invention comporte un piston de vérin qui comprend un conduit de dégazage de piston qui relie la chambre inférieure et la chambre supérieure du vérin de commande hydraulique à double effet, ledit conduit permettant à l'air pouvant former une poche dans ladite chambre inférieure de passer dans ladite chambre supérieure.

Le dispositif de levée de bille à vis pour moteur à taux de compression variable suivant la présente invention comporte un conduit de dégazage de piston qui est constitué d'un espace laissé entre le piston de vérin et la vis de serrage calculé pour constituer une perte de charge limitant le débit de fluide hydraulique entre la chambre inférieure et la chambre supérieure du vérin de commande hydraulique à double effet.

Le dispositif de levée de bille à vis pour moteur à taux de compression variable suivant la présente invention comporte un conduit de dégazage de piston du piston de vérin qui comprend un espace important laissé entre le piston de vérin et la vis de serrage, ledit espace laissant passer le fluide hydraulique de la chambre inférieure vers la chambre supérieure du vérin de commande hydraulique à double effet, via une gorge aménagée sur la face inférieure d'une rondelle de dégazage serrée entre ladite vis de serrage et ledit piston de vérin.

Le dispositif de levée de bille à vis pour moteur à taux de compression variable suivant la présente invention comporte une gorge dont la rondelle de dégazage est en forme de spirale pour présenter une grande longueur, le début de ladite spirale débouchant dans le trou central de ladite rondelle, tandis que la fin de ladite spirale débouche en périphérie de ladite rondelle.

Le dispositif de levée de bille à vis pour moteur à taux de compression variable suivant la présente invention comporte un conduit de dégazage de piston qui est constitué d'un conduit capillaire de dégazage aménagé ou rapporté dans le corps de la vis de serrage permettant de fixer le piston de vérin sur la crémaillère de commande, le profil, la section et la longueur dudit conduit capillaire étant calculés pour constituer une perte de charge limitant le passage du fluide hydraulique entre la chambre inférieure et la chambre supérieure du vérin de commande.

Le dispositif de levée de bille à vis pour moteur à taux de compression variable suivant la présente invention comporte un vérin de commande hydraulique à double effet qui comprend un conduit de dégazage de vérin dont l'entrée est positionnée au point le plus haut de la chambre supérieure et dont la sortie débouche en un point quelconque du moteur à taux de compression variable, ledit conduit de dégazage de vérin pouvant être obstrué ou ouvert au moyen d'une électrovanne de dégazage.

Le dispositif de levée de bille à vis pour moteur à taux de compression variable suivant la présente invention comporte une chambre supérieure du vérin de commande qui comprend un clapet anti-retour de réapprovisionnement, ledit clapet permettant au fluide hydraulique sous pression provenant de la centrale hydraulique du moteur à taux de compression variable d'entrer dans la dite chambre supérieure, mais non d'en sortir.

Le dispositif de levée de bille à vis pour moteur à taux de compression variable suivant la présente invention comporte une chambre inférieure du vérin de commande qui comprend un clapet anti-retour de réapprovisionnement, ledit clapet permettant au fluide hydraulique sous pression provenant de la centrale hydraulique du moteur à taux de compression variable d'entrer dans la dite chambre inférieure, mais non d'en sortir.

Le dispositif de levée de bille à vis pour moteur à taux de compression variable suivant la présente invention comporte une platine rapportée sur le carter cylindres du moteur à taux de compression variable dans laquelle est aménagé le canal de transfert, ladite platine comportant les moyens de levage des billes et les moyens d'étanchéité assurant l'étanchéité entre ledit canal de transfert et des conduits intégrés au carter cylindres. La description qui va suivre au regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en coupe schématique illustrant les principaux composants et leur positionnement dans le moteur à taux de compression variable d'un dispositif de levée de bille à vis pour moteur à taux de compression variable suivant la présente invention.
Figure 2 est une vue en coupe montrant les moyens d'entraînement du dispositif de levée de bille à vis pour moteur à taux de compression variable suivant la présente invention réalisé, par exemple, par l'intermédiaire d'au moins un moteur électrique rotatif prévu pour entraîner en rotation au moins une vis permettant de lever ou de déposer de son siège au moins une bille ou clapet.
Figure 3 est une vue en perspective éclatée représentant les moyens d'entraînement du dispositif de levée de bille à vis pour moteur à taux de compression variable suivant la présente invention.
Figures 4 à 6 sont de vues schématiques illustrant le principe de fonctionnement du dispositif de levée de bille à vis pour moteur à taux de compression variable suivant la présente invention.
Figure 7 est une vue en perspective éclatée montrant le bloc moteur du moteur à taux de compression variable et le positionnement du dispositif de levée de bille à vis pour moteur à taux de compression variable suivant la présente invention sur ledit bloc moteur.

### DESCRIPTION DE L'INVENTION :

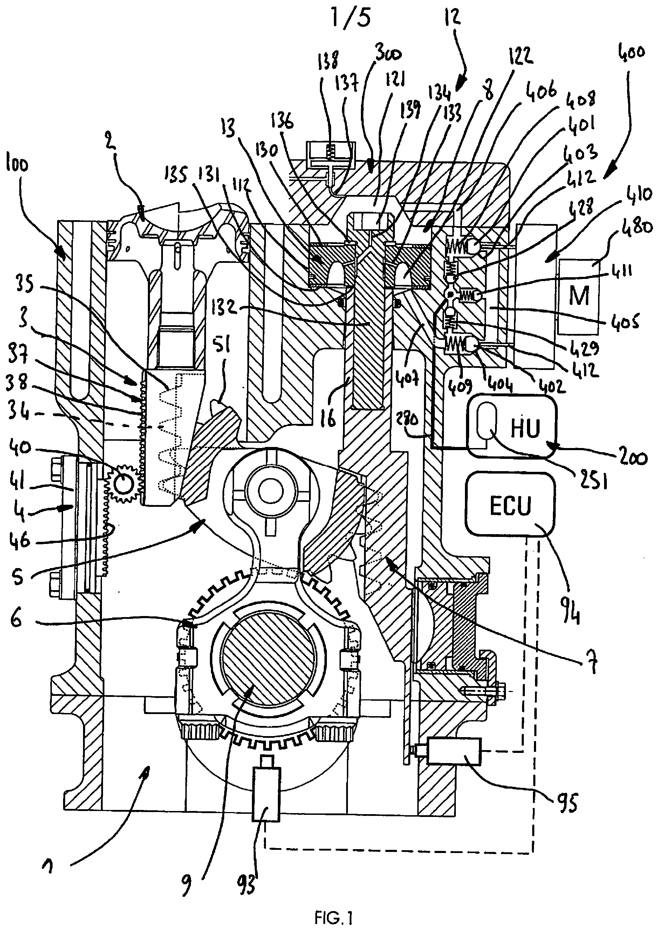

On a montré en figure 1 un dispositif de réglage du taux de compression 400 pour moteur à taux de compression variable comprenant des moyens d'obturation d'au moins un conduit reliant la chambre supérieure 121 et inférieure 122 d'un vérin de commande hydraulique à double effet 8, et des moyens de levage permettant de soulever ou de déposer de son siège les moyens d'obturation pour laisser passer le fluide hydraulique dans les deux sens.

Selon les demandes de brevet et brevets d'invention appartenant au demandeur, le moteur à taux de compression variable comprend un dispositif de transmission mécanique 1 comportant dans la partie inférieure du piston de combustion 2 un organe de transmission 3 dit « crémaillère de piston » solidaire dudit piston et coopérant, d'une part avec un dispositif de guidage à roulement 4, et d'autre part avec une roue dentée 5.

L'organe de transmission ou crémaillère de piston 3 solidaire du piston 2 est pourvu sur l'une de ses faces d'une première crémaillère de forte dimension 35 dont les dents 34 coopèrent avec celles 51 de la roue dentée 5.

L'organe de transmission ou crémaillère de piston 3 comporte, à l'opposé de la première crémaillère 35, une seconde crémaillère 37 dont les dents 38 de faible dimension coopèrent avec celles d'un rouleau 40 du dispositif de guidage à roulement 4.

Le carter cylindres 100 est solidaire d'un support 41 comportant des crémaillères 46 assurant la synchronisation du déplacement du rouleau 40 du dispositif de guidage à roulement 4 avec celui du piston 2.

La roue dentée 5 coopère avec une bielle 6 reliée à un vilebrequin 9 afin de réaliser la transmission du mouvement entre le piston de combustion 2 et ledit vilebrequin 9.

La roue dentée 5 coopère, à l'opposé de l'organe de transmission ou crémaillère de piston 3, avec une crémaillère de commande 7 dont la position verticale par rapport au carter cylindres 100 est pilotée par un dispositif de contrôle 12 comportant le vérin de commande 8, et un piston de vérin 13 qui est guidé dans un cylindre de vérin 112 aménagé dans le carter cylindres 100.

Le vérin de commande 8 comporte au-dessus et en dessous du piston de vérin 13 une chambre supérieure 121 et une chambre inférieure 122, lesdites chambres ayant une cylindrée différant l'une de l'autre à même course du piston de vérin 13.

Le vérin de commande 8 est constitué d'une tige inférieure de vérin 16 solidaire de la crémaillère de commande 7 et d'une vis de serrage 132 permettant de fixer le piston de vérin 13 sur ladite tige inférieure de vérin 16 de la crémaillère de commande 7.

La vis de serrage 132 comporte une tête de serrage 139 logée dans la chambre supérieure 121 du vérin de commande 8.

Le piston de vérin 13 du vérin de commande hydraulique à double effet 8 peut comporter deux butées élastiques de fin de course 130, 131 qui déterminent la course maximale dudit piston de vérin.

La première butée 131 permet de limiter le taux de compression maximal du moteur à taux de compression variable lorsqu'elle entre en contact avec le carter cylindres 100 dudit moteur, tandis que la deuxième butée 130 permet de limiter le taux de compression minimal du moteur à taux de compression variable lorsqu'elle entre en contact avec la culasse 300 du vérin de commande 8 dudit moteur.

Le piston de vérin 13 du vérin de commande hydraulique à double effet 8 comporte entre la face inférieure dudit piston 13 et la tige inférieure de vérin 16 de la crémaillère de commande 7 une rondelle de réglage 135 qui permet de régler la position dudit piston 13 par rapport à ladite crémaillère 7.

Cette rondelle de réglage 135 permet de régler le taux de compression du moteur à taux de compression variable lorsque l'une ou l'autre des deux butées élastiques de fin de course 130, 131 entre en contact soit avec le carter cylindres 100 dudit moteur s'agissant de la première butée 131, soit avec la culasse 300 du vérin de commande 8 dudit moteur s'agissant de la deuxième butée 130.

Le piston de vérin 13 comporte un conduit de dégazage de piston 133 qui relie la chambre inférieure 122 et la chambre supérieure 121 du vérin de commande hydraulique à double effet 8. Le conduit de dégazage de piston 133 permet à l'air formant une poche dans la chambre inférieure 122 de passer dans la chambre supérieure 121.

Le conduit de dégazage de piston 133 peut être constitué d'un espace laissé entre le piston de vérin 13 et la vis de serrage 132 calculé pour constituer une perte de charge limitant le débit de fluide hydraulique entre la chambre inférieure 122 et la chambre supérieure 121 du vérin de commande hydraulique à double effet 8.

Le conduit de dégazage de piston 133 du piston de vérin 13 peut comprendre un espace important laissé entre le piston de vérin 13 et la vis de serrage 132, ledit espace laissant passer le fluide hydraulique de la chambre inférieure 122 vers la chambre supérieure 121 du vérin de commande hydraulique à double effet 8, via une gorge aménagée sur la face inférieure d'une rondelle de dégazage 136 serrée entre ladite vis de serrage 132 et ledit piston de vérin 13.

Le profil, la section et la longueur de la gorge sont calculés pour constituer une perte de charge limitant le passage dudit fluide entre la vis de serrage 132 et le piston de vérin 13 du vérin de commande hydraulique à double effet 8.

La gorge aménagée dans la rondelle de dégazage 136 peut être en forme de spirale pour présenter une grande longueur, le début de ladite spirale débouchant dans le trou central de ladite rondelle, tandis que la fin de ladite spirale débouche en périphérie de ladite rondelle.

Le conduit de dégazage de piston 133 du piston de vérin 13 communique avec un conduit capillaire de dégazage 134 aménagé ou rapporté dans le corps de la vis de serrage 132. Le profil, la section et la longueur du conduit capillaire de dégazage 134 sont calculés pour constituer une perte de charge limitant le passage du fluide hydraulique entre la chambre inférieure 122 et la chambre supérieure 121 du vérin de commande hydraulique à double effet 8.

Le vérin de commande hydraulique à double effet 8 peut comporter un conduit de dégazage de vérin 137 dont l'entrée est positionnée au point le plus haut de la chambre supérieure 121 et dont la sortie débouche en un point quelconque du moteur à taux de compression variable.

La sortie du conduit de dégazage de vérin 137 débouche directement ou indirectement dans le carter d'huile de lubrification 500 dudit moteur. Le conduit de dégazage de vérin 137 peut être obstrué ou ouvert au moyen d'une électrovanne de dégazage 138.

Le moteur à taux de compression variable peut comprendre au moins un capteur de position 95 permettant de mesurer la position verticale de la crémaillère de commande 7.

Le moteur à taux de compression variable peut comprendre au moins un capteur détectant le passage de la crémaillère de piston 3 de manière à pouvoir en déduire le taux de compression dudit moteur tenant compte de la position angulaire du vilebrequin 9 à laquelle le passage de la crémaillère de piston 3 a été détectée.

Le moteur à taux de compression variable peut comprendre au moins un capteur de pression, non représenté, qui permet de mesurer la pression qui règne dans la chambre supérieure 121 du vérin de commande hydraulique à double effet 8.

Le moteur à taux de compression variable peut comporter au moins un capteur de pression, non représenté, qui permet de mesurer la pression qui règne dans une chambre de combustion d'un piston de combustion 2.

Le moteur à taux de compression variable peut comprendre au moins un capteur de position angulaire de vilebrequin 93 et au moins un calculateur 94.

Le dispositif de réglage du taux de compression 400 suivant la présente invention comprend des moyens d'obturation qui sont constitués d'au moins deux billes 401, 402 ou clapets reposant chacun(e) sur un siège 403, 404 et obturant respectivement l'une et l'autre extrémité d'un canal de transfert 405, reliant par l'intermédiaire de conduits 406, 407 intégrés au carter cylindres 100, la chambre supérieure 121 et la chambre inférieure 122 du vérin de commande hydraulique à double effet 8.

Les billes 401, 402 agissent comme un clapet anti-retour lorsqu'elles sont maintenues sur leurs sièges 403, 404 par un ressort 408, 409 afin de ne laisser passer le fluide hydraulique que dans un sens.

Le dispositif de réglage du taux de compression 400 suivant la présente invention comprend des moyens de levage 410 permettant de lever ou de déposer de son siège 403, 404 au moins une bille 401, 402 ou clapet.

Le dispositif de réglage du taux de compression 400 comprend au moins un clapet anti-retour de compensation 411 permettant au fluide hydraulique de sortir du canal de transfert 405 pour retourner dans une centrale hydraulique 200 du moteur à taux de compression variable contenant une réserve sous pression 251 dudit fluide, mais interdisant audit fluide de retourner dans ledit canal transfert 405.

Les moyens de levage 410 du dispositif de réglage du taux de compression 400 sont constitués pour chaque bille 401, 402 d'un poussoir cylindrique 412 logé dans le canal de transfert 405.

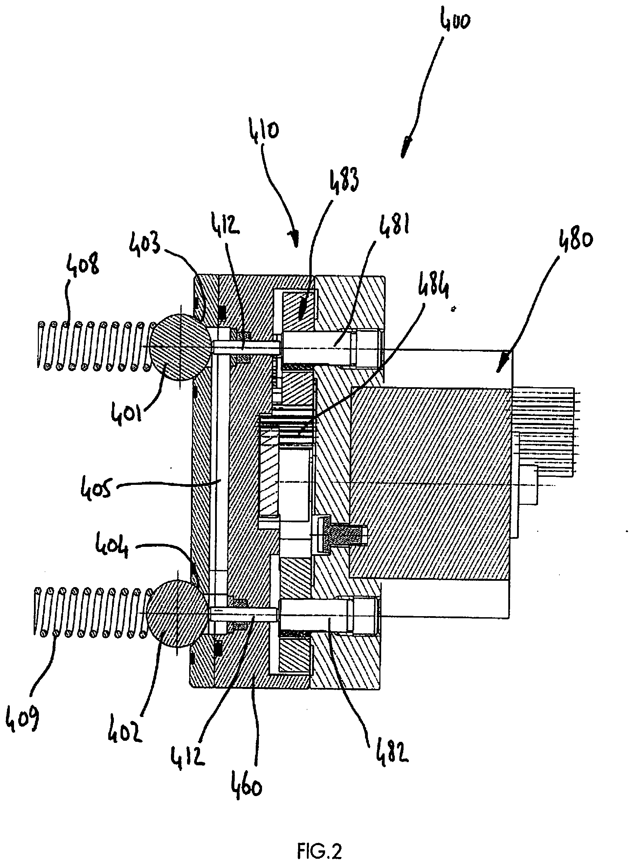

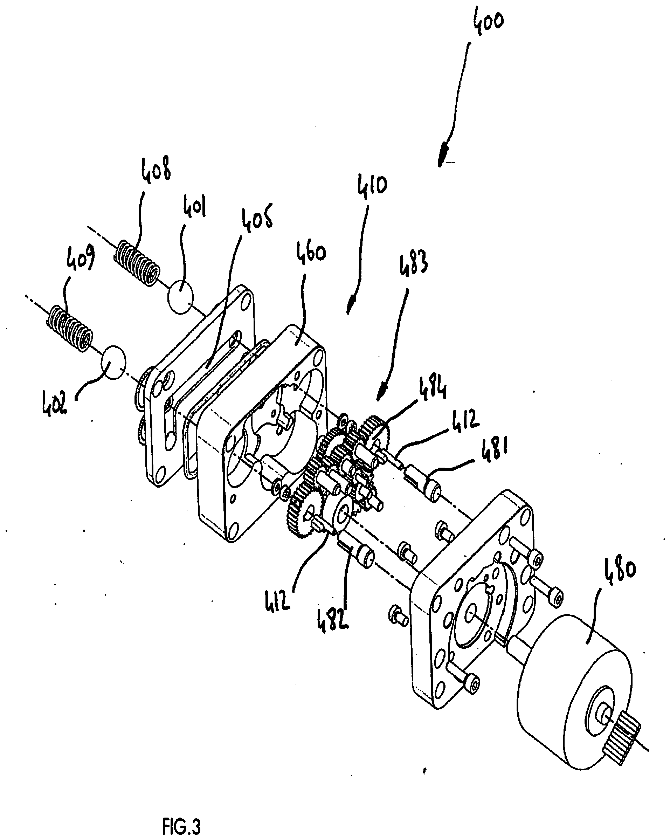

On a montré en figures 2 et 3 un exemple de réalisation, non limitatif, du dispositif de réglage du taux de compression 400 comprenant un moteur électrique 480 permettant l'entraînement d'au moins une vis 481, 482.

Les moyens de levage 410 sont constitués d'au moins un moteur électrique rotatif 480 entraînant en rotation au moins une vis 481, 482 permettant de manœuvrer en translation longitudinale au moins un poussoir cylindrique 412 afin que l'une de ses extrémités vienne au contact puis pousse ou dépose la bille 401, 402 correspondante de ou sur son siège 403, 404.

Les moyens de levage 410 sont constitués d'au moins un moteur électrique rotatif 480 prévu pour entraîner en rotation, par l'intermédiaire de moyens de transmission mécanique 483, au moins une vis 481, 482 permettant à l'aide du poussoir cylindrique 412 de lever ou de déposer de son siège 403, 404 au moins une bille 401, 402.

Le moteur électrique rotatif 480 entraîne simultanément en rotation deux vis 481, 482 permettant chacune de lever ou de déposer de leur siège 403, 404 une bille 401, 402 ou clapet, la première vis 481 allant en direction d'une première bille 401 lorsque le deuxième vis 482 s'éloigne d'une deuxième bille 402 et inversement, lesdites billes 401, 402 ne pouvant pas être levées simultanément de leurs sièges 403, 404.

Le moteur électrique rotatif 480 entraîne simultanément en rotation les deux vis 481, 482 au moyen d'au moins une roue dentée 484 reliant ledit moteur 480 aux dites vis.

Le moteur électrique rotatif 480 entraîne simultanément en rotation les deux vis 481, 482 au moyen d'au moins une courroie crantée, non représentée.

Le moteur électrique rotatif 480 entraîne simultanément en rotation les deux vis 481, 482 au moyen d'au moins une chaîne, non représentée.

Les deux vis 481, 482 sont entraînées en rotation dans le même sens, la première vis 481 présentant un pas inversé par rapport à celui de la deuxième vis 482.

Les deux vis 481, 482 sont simultanément entraînées en rotation en sens inverse l'une de l'autre, la première vis 481 étant vissée tandis que la deuxième 482 est dévissée et inversement.

Le moteur électrique rotatif 480 suivant la présente invention est muni d'un capteur de position angulaire, non représenté. Ledit moteur peut être également un moteur pas à pas connu en soi.

Egalement, le dispositif de réglage du taux de compression 400 suivant la présente invention comporte un clapet anti-retour 428 permettant le réapprovisionnement de la chambre supérieure 121 du vérin de commande hydraulique à double effet 8. Le clapet anti-retour de réapprovisionnement 428 permet au fluide hydraulique sous pression, provenant de la centrale hydraulique 200 du moteur à taux de compression variable, d'entrer dans la chambre supérieure 121 mais non d'en sortir.

Le dispositif de réglage du taux de compression à levée de bille 400 suivant la présente invention comporte un clapet anti-retour 429 permettant le réapprovisionnement de la chambre inférieure 122 du vérin de commande hydraulique à double effet 8. Le clapet anti-retour de réapprovisionnement 429 permet au fluide hydraulique sous pression provenant de la centrale hydraulique 200 du moteur à taux de compression variable d'entrer dans la chambre inférieure 122, mais non d'en sortir.

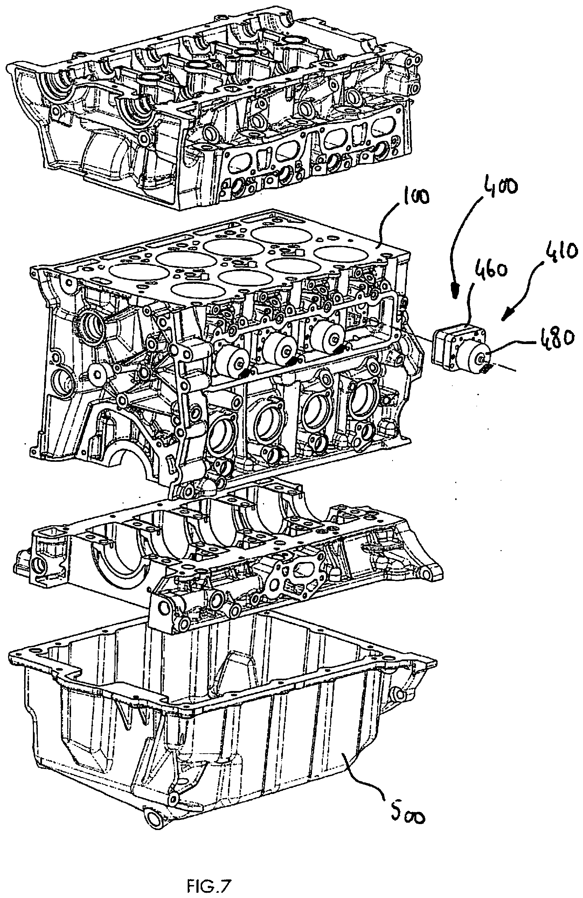

On a illustré en figure 7 le dispositif de réglage du taux de compression 400 comportant une platine 460 rapportée sur le carter cylindres 100 du moteur à taux de compression variable dans laquelle est aménagé le canal de transfert 405.

Egalement, la platine 460 porte les moyens de levage 410 des billes 401, 402 du dispositif de réglage du taux de compression 400 à vis 481, 482. La platine 460 comporte des moyens qui assurent l'étanchéité entre le canal de transfert 405 et les conduits 406, 407, intégrés au carter cylindres 100 avec lesquels communique ledit canal de transfert 405.

### FONCTIONNEMENT :

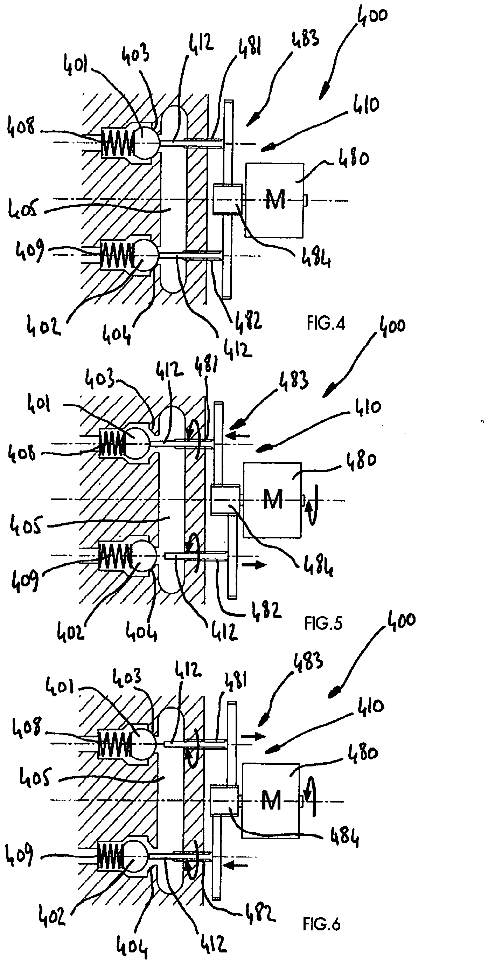

Selon un mode particulier de réalisation, le fonctionnement du dispositif de levée de bille 400 à vis 481, 482 pour moteur à taux de compression variable est le suivant :
Le dispositif de levée de bille 400 pour moteur à taux de compression variable comprend au moins un moteur électrique rotatif 480 prévu pour entraîner en rotation au moins une vis 481 482. Le moteur électrique rotatif 480 permet de lever ou de déposer de son siège 403, 404 au moins une bille 401, 402 ou clapet du vérin de commande 8, ledit vérin permettant de contrôler le taux de compression du moteur à taux de compression variables (figure 4 à 6).

Lorsque le moteur à taux de compression variable est utilisé à un taux de compression donné et en l'absence de toute variation dudit taux de compression, les deux billes 401, 402 qui permettent respectivement de laisser passer le fluide hydraulique de la chambre supérieure 121 à la chambre inférieure 122 du vérin de commande 8 et inversement reposent sur leur siège 403, 404.

En ce cas, ledit fluide ne peut se déplacer ni depuis la chambre supérieure 121 vers la chambre inférieure 122, ni dans le sens inverse, ce qui a pour effet de maintenir la position du vérin de commande 8 du moteur à taux de compression variable à une valeur déterminée, et de maintenir fixe le taux de compression dudit moteur.

Tenant compte des conditions de fonctionnement du moteur à taux de compression variable, il est régulièrement nécessaire d'en adapter le taux de compression.

Selon le cas, cette variation du taux de compression dudit moteur sert à maximiser les performances ou le rendement dudit moteur ou encore, à améliorer le fonctionnement du catalyseur trois voies.

Si, tenant compte de ces diverses nécessités, le calculateur 94 (ECU) du moteur à taux de compression variable doit augmenter le taux de compression dudit moteur, ledit calculateur 94 envoie un courant électrique au moteur électrique rotatif 480 de manière à visser la vis 482 positionnée en face de la bille 402 de la chambre inférieure de vérin 122, ce qui a pour effet de lever ladite bille 402 de son siège 404 par l'intermédiaire de son toucheau cylindrique 412.

Ainsi, la levée de la bille 402 de son siège 404 permet au fluide hydraulique de sortir de la chambre inférieure 122 du vérin de commande 8 et de pénétrer dans la chambre supérieure 121 via le canal de transfert 405, la bille 401 de la chambre supérieure 121 du vérin de commande 8 laissant quant à elle le fluide hydraulique rentrer dans ladite chambre supérieure 121, mais ne le laissant pas en repartir, du fait de son effet anti-retour.

Comme on le voit sur la figure 1, aucune pompe hydraulique n'est nécessaire pour assurer le déplacement du piston de vérin 13.

Ledit déplacement est en effet assuré par les efforts alternatifs qui sont imprimés audit piston 13 par la crémaillère de commande 7 du moteur à taux de compression variable sur laquelle il est fixé, ladite crémaillère étant elle-même assujettie aux efforts résultants de la pression des gaz contenus dans la chambre de combustion du moteur et/ou aux efforts résultants de l'inertie des principales pièces en mouvement dudit moteur que sont la roue dentée 5, le piston de combustion 2, la crémaillère de piston 3 et son dispositif de guidage à roulement 4.

Comme on peut aisément le déduire à la vue de la figure 1, le déplacement du piston de vérin 13 du vérin de commande 8 en direction de la chambre inférieure 122 induit une augmentation de volume de la chambre supérieure 121 plus grande que la diminution de volume de la chambre inférieure 122, ceci résultant de l'absence de la tige supérieure de vérin qui est remplacée par une vis de serrage 132.

De ce fait, la pression dans la chambre supérieure 121 diminue lorsque le piston de vérin 13 se déplace en direction de la chambre inférieure 122, et le clapet anti-retour de réapprovisionnement 428 de la chambre supérieure 121 laisse entrer le fluide hydraulique sous pression provenant de la centrale hydraulique 200 du moteur à taux de compression variable, dans ladite chambre supérieure 121.

A l'inverse, lorsque le calculateur 94 (ECU) du moteur à taux de compression variable doit abaisser le taux de compression dudit moteur, il envoie un courant électrique au moteur électrique rotatif 480 de manière à visser la vis 481 positionnée en face de la bille 401 de la chambre supérieure 121 du vérin de commande 8, ce qui a pour effet de lever ladite bille 401 de son siège 403, par l'intermédiaire de son toucheau cylindrique 412.

Ainsi, la levée de la bille 401 de son siège 403 permet au fluide hydraulique de sortir de la chambre supérieure 121 du vérin de commande 8 et de pénétrer dans la chambre inférieure 122 via le canal de transfert 405, la bille 402 de la chambre inférieure 122 du vérin de commande 8 laissant quant à elle le fluide hydraulique rentrer dans ladite chambre inférieure 122, mais ne le laissant pas en repartir, du fait de son effet anti-retour.

Comme on peut aisément le déduire à la vue de la figure 1, le déplacement du piston de vérin 13 du vérin de commande 8 en direction de la chambre supérieure 121 induit une augmentation du volume de la chambre inférieure 122 plus petite que la diminution du volume de la chambre supérieure121, du fait de l'absence de la tige supérieure de vérin remplacée par la vis de serrage 132.

De ce fait, la pression dans les chambres 121, 122 et dans le canal de transfert 405 devient supérieure à celle régnant dans la centrale hydraulique 200 lorsque le piston de vérin 13 se déplace en direction de la chambre supérieure 121. En conséquence, le clapet anti-retour de compensation 411, dont la sortie débouche par l'intermédiaire d'un conduit 280 dans la centrale hydraulique 200, laisse sortir le fluide hydraulique sous pression provenant de la chambre supérieure 121 vers ladite centrale hydraulique via le canal de transfert 405.

On note en ce cas que le volume de fluide hydraulique expulsé par le vérin de commande 8 vers la centrale hydraulique 200 via le clapet anti-retour de compensation 411 est approximativement égal à la différence entre le volume de la chambre supérieure 121 balayé par le piston de vérin 13 et le volume de la chambre inférieure 122 simultanément balayé par ledit piston 13 lors de la manœuvre de déplacement effectuée par ledit piston, ladite manœuvre visant à abaisser le taux de compression du moteur à taux de compression variable.

Comme on le constate, l'action conjuguée des billes 401, 402 et des efforts alternatifs appliqués au piston de vérin 13 par les autres composants mobiles du moteur à taux de compression variable définit un fonctionnement qui s'apparente à celui d'un cliquet anti-retour, ledit piston 13 pouvant se déplacer dans la direction de la chambre 121 ou 122 selon le cas dont la bille 401, 402 est maintenue ouverte par sa vis 481, 482, mais non dans la direction inverse.

Qu'il s'agisse d'une manœuvre visant à augmenter le taux de compression du moteur à taux de compression variable ou d'une autre visant à l'abaisser, le moment ou la bille 401, 402 correspondante maintenue levée par sa vis 481, 482, doit être reposée sur son siège 403, 404 est déterminé par le calculateur 94 (ECU) du moteur à taux de compression variable.

Ledit moment est déduit par ledit calculateur 94 (ECU) à partir de la position de la crémaillère de commande 7, ladite position lui étant retournée par un capteur de position 95 avec lequel il coopère, et ledit capteur mesurant en permanence la position verticale de ladite crémaillère 7.

Ainsi renseigné, le calculateur 94 (ECU) peut reposer la bille 401, 402 sur son siège 403, 404 lorsque ladite crémaillère de commande 7 a atteint la position correspondant au taux de compression recherché.

Comme illustré en figures 4 à 6, les deux billes 401, 402 ne peuvent jamais être levées simultanément de leur siège 403, 404 par le moteur électrique 480 par l'intermédiaire des vis 481, 482.

La coopération entre le calculateur 94 (ECU) et le capteur de position 95 de la crémaillère de commande 7 permet également de compenser toute dérive de la position de ladite crémaillère de commande 7 pouvant résulter de diverses fuites, qu'il s'agisse d'une fuite entre la chambre supérieure 121 et inférieure 122 du vérin de commande 8 due à un défaut d'étanchéité du joint du piston de vérin 13, ou qu'il s'agisse de fuites entre l'une quelconque desdites chambres 121, 122 et l'extérieur du vérin de commande 8.

En ce cas, le calculateur 94 (ECU) peut ordonner la levée temporaire de la bille 401, 402 de la chambre opposée à la direction de la dérive du piston de vérin 13, jusqu'à ce que ledit piston revienne à la position recherchée.

En outre, le calculateur 94 (ECU) peut aussi ordonner la levée partielle de la bille 401, 402 de la chambre opposée à la direction de la dérive du piston de vérin 13 de manière à compenser ladite dérive.

Lorsqu'une fuite survient entre l'une quelconque des chambres supérieures 121 et/ou inférieures 122 et l'extérieur du vérin de commande 8, ledit vérin est réapprovisionné en fluide hydraulique par le clapet anti-retour de réapprovisionnement 428 de la chambre supérieure 121, directement s'agissant de la chambre supérieure, ou indirectement via ladite chambre supérieure et le canal de transfert 405 lorsque la bille 401 de ladite chambre supérieure 121 est ouverte ou entrouverte, s'agissant de la chambre inférieure 122.

Selon un mode particulier de réalisation du dispositif de levée de bille à vis pour moteur à taux de compression variable 400 selon l'invention, outre la position de la crémaillère de commande 7 qui est transmise en permanence au calculateur 94 (ECU) par un capteur de position 95, ledit calculateur peut également être renseigné sur la position angulaire du vilebrequin 9 du moteur à taux de compression variable par le capteur angulaire de vilebrequin 93, connu en soi, dudit moteur.

Selon ce mode de réalisation, la différence de pression entre l'amont et l'aval de la bille 401 de la chambre supérieure 121 et de la bille 402 de la chambre inférieure 122 lorsque lesdites billes 401, 402 reposent sur leur siège 403, 404 aura été préalablement enregistrée dans la mémoire du calculateur 94 (ECU) pour différentes positions angulaires dudit vilebrequin 9 correspondant à différents points de régime et de charge du moteur à taux de compression variable.

Ces valeurs préenregistrées permettent au calculateur 94 (ECU) de déduire la différence de pression entre l'amont et l'aval des billes 401, 402 de la chambre supérieure 121 et de la chambre inférieure 122 du vérin de commande 8 en tout point de régime et de charge dudit moteur et pour toute position angulaire du vilebrequin 9.

Selon ce mode de réalisation, le calculateur 94 (ECU) peut déclencher la levée de la bille 401, 402 de la chambre supérieure 121 ou inférieure 122 du vérin de commande 8 à un angle de vilebrequin 9, correspondant à une différence de pression faible entre l'amont et l'aval de ladite bille, pour permettre la levée de ladite bille 401, 402 de son siège 403, 404 par sa vis 481, 482 sans impliquer pour le moteur électrique rotatif 480 de produire une puissance et/ou un couple élevé.

En outre, selon ce mode de réalisation, le calculateur 94 (ECU) peut anticiper le comportement du vérin de commande 8 avec une bonne précision car ledit calculateur 94 (ECU) dispose alors des informations nécessaires pour prévoir le nombre de degrés de rotation du vilebrequin 9 requis pour laisser passer la quantité de fluide hydraulique entre la bille 401, 402 de la chambre supérieure 121 ou inférieure 122 du vérin de commande 8 et son siège 403, 404 qui permet au piston de vérin 13 d'atteindre sa nouvelle consigne de position.

Le calculateur 94 (ECU) peut ainsi en déduire la hauteur et la durée de la levée de la bille 401, 402 sur son siège 403, 404 qui sont nécessaires pour que le piston de vérin 13 atteigne sa nouvelle consigne de position.

On note que la hauteur de levée et la durée de levée de la bille 401, 402 peuvent être corrigées par le calculateur 94 (ECU) en fonction de la viscosité du fluide hydraulique, afin d'augmenter la précision de positionnement du piston de vérin 13. Ladite viscosité peut notamment être déduite par le calculateur 94 (ECU) à partir de la température du fluide hydraulique, ladite température lui étant transmise par un capteur, non représenté.

On note que le dispositif de levée de bille 400 à vis 481, 482 permet de lever les billes 401, 402 de la chambre supérieure 121 ou inférieure 122 du vérin de commande 8 de leur siège 403, 404 sur une infinité de hauteurs, comprises entre une hauteur nulle lorsque ladite bille 401, 402 est en contact avec son siège 403, 404 et une hauteur maximale lorsque ladite bille est en contact avec sa butée de levée maximale.

Pour un effort donné exercé sur le piston de vérin 13 du vérin de commande 8 par la crémaillère de commande 7, les grandes hauteurs de levée permettent d'obtenir une grande vitesse de déplacement dudit piston, tandis que les petites hauteurs de levée permettent d'obtenir une petite vitesse de déplacement dudit piston.

Ladite grande vitesse permet d'aller rapidement d'une position de piston de vérin 13 éloignée de la position de consigne à une autre position voisine de ladite position de consigne, tandis que ladite petite vitesse permet d'aller de ladite position voisine de ladite position de consigne, à ladite position de consigne.

Ladite petite vitesse peut également être utilisée pour compenser la dérive lente du piston de vérin 13 induite par d'éventuelles fuites, ou pour aller d'une position de consigne à une autre position de consigne lorsque lesdites positions sont proches l'une de l'autre.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tout autre équivalent.

## Revendications

1. Moteur à taux de compression variable comprenant un dispositif de réglage du taux de compression muni d'un dispositif de levée de bille à vis, ledit moteur comprenant un canal de transfert (405) reliant une chambre supérieure (121) et une chambre inférieure (122) d'un vérin de commande hydraulique à double effet (8), et au moins un piston de vérin (13) fixé à une crémaillère de commande (7), **caractérisé en ce que** le dispositif de levée de bille à vis comprend :
• Au moins deux billes (401, 402) ou clapets reposant chacun(e) sur un siège (403, 404) et obturant respectivement l'une et l'autre extrémité du canal de transfert (405) reliant la chambre supérieure (121) et la chambre inférieure (122) du vérin de commande (8), lesdites billes (401, 402) agissant comme un clapet anti-retour lorsqu'elles sont maintenues sur leur siège (403, 404) par un ressort (408, 409) afin de ne laisser passer le fluide hydraulique que dans un sens ;
• Des moyens de levage (410) constitués d'un poussoir cylindrique (412) logé dans le canal de transfert (405) et au moins un moteur électrique rotatif (480) muni d'un capteur angulaire, ledit moteur électrique (480) assurant par l'intermédiaire de moyen de transmission mécanique (483) l'entraînement en rotation d'au moins une vis (481, 482) permettant de manœuvrer en translation longitudinale ledit poussoir cylindrique (412) afin que son extrémité vienne lever ou déposer de son siège (403, 404) au moins une bille ou clapet (401, 402).

2. Moteur à taux de compression variable suivant la revendication 1, **caractérisé en ce que** le dispositif de levée de bille comprend au moins un clapet anti-retour de compensation (411) permettant au fluide hydraulique de sortir du canal de transfert (405) pour retourner dans une centrale hydraulique (200) du moteur à taux de compression variable contenant une réserve sous pression (251) dudit fluide, mais interdisant audit fluide de retourner dans ledit canal de transfert.

3. Moteur à taux de compression variable la revendication 1, **caractérisé en ce que** le moteur électrique rotatif (480) entraîne simultanément en rotation deux vis (481, 482) permettant chacune de lever ou de déposer de leur siège (403, 404) une bille (401, 402) ou clapet, la première vis (481) allant en direction d'une première bille (401) lorsque la deuxième vis (482) s'éloigne d'une deuxième bille (402) et inversement, lesdites billes (401, 402) ne pouvant pas être levées simultanément de leur siège (403, 404).

4. Moteur à taux de compression variable suivant la revendication 1, **caractérisé en ce que** le moteur électrique rotatif (480) entraîne simultanément en rotation les deux vis (481, 482) au moyen d'au moins une roue dentée (484) reliant ledit moteur auxdites vis.

5. Moteur à taux de compression variable suivant la revendication 1, **caractérisé en ce que** le moteur électrique rotatif (480) entraîne simultanément en rotation les deux vis (481, 482) au moyen d'au moins une courroie crantée.

6. Moteur à taux de compression variable suivant la revendication 1, **caractérisé en ce que** le moteur électrique rotatif (480) entraîne simultanément en rotation les deux vis (481, 482) au moyen d'au moins une chaîne.

7. Moteur à taux de compression variable suivant la revendication 1, **caractérisé en ce que** les deux vis (481, 482) sont entraînées en rotation dans le même sens, la première vis présentant un pas inversé par rapport à celui de la deuxième vis.

8. Moteur à taux de compression variable suivant la revendication 1, **caractérisé en ce que** les deux vis (481, 482) sont simultanément entraînées en rotation en sens inverse l'une de l'autre, la première vis étant vissée tandis que la deuxième est dévissée et inversement.

9. Moteur à taux de compression variable suivant la revendication 1, **caractérisé en ce que** le piston de vérin (13) du vérin de commande hydraulique à double effet (8) comporte deux butées élastiques de fin de course (130, 131) qui déterminent la course maximale dudit piston, la première butée élastique (131) permettant de limiter le taux de compression maximal du moteur à taux de compression variable lorsqu'elle entre en contact avec le carter cylindres (100) dudit moteur, la deuxième butée élastique (130) permettant de limiter le taux de compression minimal du moteur à taux de compression variable lorsqu'elle entre au contact avec une culasse (300) du vérin de commande (8) dudit moteur.

10. Moteur à taux de compression variable suivant la revendication 9, **caractérisé en ce que** le piston de vérin (13) du vérin de commande hydraulique à double effet (8) fixé à la crémaillère de commande (7) comporte, entre la face inférieure dudit piston (13) et la tige inférieure de vérin (16) de la crémaillère de commande (7), une rondelle de réglage (135) qui permet de régler la position dudit piston par rapport à ladite crémaillère, de manière à pouvoir régler le taux de compression du moteur à taux de compression variable lorsque l'une ou l'autre des deux butées élastiques de fin de course (130, 131) entre en contact soit avec le carter cylindres (100) dudit moteur s'agissant de la première butée (131), soit avec la culasse (300) du vérin de commande (8) dudit moteur s'agissant de la deuxième butée (130).

11. Moteur à taux de compression variable suivant la revendication 9, **caractérisé en ce que** le piston de vérin (13) comporte un conduit de dégazage de piston (133) qui relie la chambre inférieure (122) et la chambre supérieure (121) du vérin de commande hydraulique à double effet (8), ledit conduit permettant à l'air pouvant former une poche dans ladite chambre inférieure (122) de passer dans ladite chambre supérieure (121).

12. Moteur à taux de compression variable suivant la revendication 11, **caractérisé en ce que** le conduit de dégazage de piston (133) est constitué d'un espace laissé entre le piston de vérin (13) et la vis de serrage (132) calculé pour constituer une perte de charge limitant le débit de fluide hydraulique entre la chambre inférieure (122) et la chambre supérieure (121) du vérin de commande hydraulique à double effet (8).

13. Moteur à taux de compression variable suivant la revendication 11, **caractérisé en ce que** le conduit de dégazage de piston (133) du piston de vérin (13) comprend un espace important laissé entre le piston de vérin (13) et la vis de serrage (132), ledit espace laissant passer le fluide hydraulique de la chambre inférieure (122) vers la chambre supérieure (121) du vérin de commande hydraulique à double effet (8), via une gorge aménagée sur la face inférieure d'une rondelle de dégazage (136) serrée entre ladite vis de serrage (132) et ledit piston de vérin (13).

14. Moteur à taux de compression variable suivant la revendication 13, **caractérisé en ce que** la gorge que comporte la rondelle de dégazage (136) est en forme de spirale pour présenter une grande longueur, le début de ladite spirale débouchant dans le trou central de ladite rondelle, tandis que la fin de ladite spirale débouche en périphérie de ladite rondelle.

15. Moteur à taux de compression variable suivant la revendication 11, **caractérisé en ce que** le conduit de dégazage de piston (133) est constitué d'un conduit capillaire de dégazage (134) aménagé ou rapporté dans le corps de la vis de serrage (132) permettant de fixer le piston de vérin (13) sur la crémaillère de commande (7), le profil, la section et la longueur dudit conduit capillaire (134) étant calculés pour constituer une perte de charge limitant le passage du fluide hydraulique entre la chambre inférieure (122) et la chambre supérieure (121) du vérin de commande (8).

16. Moteur à taux de compression variable suivant la revendication 1, **caractérisé en ce que** le vérin de commande hydraulique à double effet (8) comporte un conduit de dégazage de vérin (137) dont l'entrée est positionnée au point le plus haut de la chambre supérieure (121) et dont la sortie débouche en un point quelconque du moteur à taux de compression variable, ledit conduit de dégazage de vérin (137) pouvant être obstrué ou ouvert au moyen d'une électrovanne de dégazage (138).

17. Moteur à taux de compression variable suivant la revendication 1, **caractérisé en ce que** la chambre supérieure (121) du vérin de commande (8) comporte un clapet anti-retour de réapprovisionnement (428), ledit clapet permettant au fluide hydraulique sous pression provenant de la centrale hydraulique (200) du moteur à taux de compression variable d'entrer dans ladite chambre supérieure (121), mais non d'en sortir.

18. Moteur à taux de compression variable suivant la revendication 1, **caractérisé en ce que** la chambre inférieure (122) du vérin de commande (8) comporte un clapet anti-retour de réapprovisionnement (429), ledit clapet permettant au fluide hydraulique sous pression provenant de la centrale hydraulique (200) du moteur à taux de compression variable d'entrer dans ladite chambre inférieure (122), mais non d'en sortir.

19. Moteur à taux de compression variable suivant la revendication 1, **caractérisé en ce que** le dispositif de levée de bille à vis comporte une platine (460) rapportée sur le carter cylindres (100) du moteur à taux de compression variable dans laquelle est aménagé le canal de transfert (405), ladite platine comportant les moyens de levage (410) des billes (401, 402) et les moyens d'étanchéité assurant l'étanchéité entre ledit canal de transfert (405) et les conduits (406, 407) intégrés au carter cylindres (100).

## Patentansprüche

1. Motor mit variablem Verdichtungsverhältnis, der eine Vorrichtung zur Einstellung des Verdichtungsverhältnisses umfasst, die mit einer Hubvorrichtung mit Kugelgewindegetriebe ausgestattet ist, wobei der Motor einen Transferkanal (405) umfasst, der eine obere Kammer (121) und eine untere Kammer (122) eines doppelt wirkenden hydraulischen Steuerzylinders (8) verbindet, sowie mindestens einen Zylinderkolben (13), der an einer Steuerzahnstange (7) befestigt ist, **dadurch gekennzeichnet, dass** die Hubvorrichtung mit Kugelgewindegetriebe umfasst:
µ Mindestens zwei Kugeln (401, 402) oder Ventile, die jeweils auf einem Sitz (403, 404) aufliegen und jeweils das eine und das andere Ende des Transferkanals (405) verschließen, der die obere Kammer (121) und die untere Kammer (122) des Steuerzylinders (8) verbindet, wobei die Kugeln (401, 402) als Rückschlagventil wirken, wenn sie durch eine Feder (408, 409) in ihrem Sitz (403, 404) gehalten werden, um die Hydraulikflüssigkeit nur in einer Richtung durchzulassen;
● Hubmittel (410), bestehend aus einem zylindrischen Schieber (412), der im Transferkanal (405) untergebracht ist, und mindestens einem drehenden Elektromotor (480), der mit einem Winkelsensor ausgestattet ist, wobei der Elektromotor (480) über mechanische Getriebemittel (483) den Drehantrieb mindestens einer Gewindespindel (481, 482) gewährleistet, so dass der zylindrische Schieber (412) translatorisch bewegt werden kann, so dass sein Ende mindestens eine Kugel oder ein Ventil (401, 402) von ihrem oder seinem Sitz (403, 404) anhebt oder darauf ablegt.

2. Motor mit variablem Verdichtungsverhältnis nach Anspruch 1, **dadurch gekennzeichnet, dass** die Hubvorrichtung mit Kugelgewindegetriebe mindestens ein kompensierendes Rückschlagventil (411) umfasst, so dass die Hydraulikflüssigkeit aus dem Transferkanal (405) austreten kann, um zu einem Hydraulikaggregat (200) des Motors mit variablem Verdichtungsverhältnis, das einen Druckspeicher (251) der Flüssigkeit enthält, zurückzukehren, die Flüssigkeit jedoch daran gehindert wird, zu dem Transferkanal zurückzukehren.

3. Motor mit variablem Verdichtungsverhältnis nach Anspruch 1, **dadurch gekennzeichnet, dass** der drehende Elektromotor (480) zwei Gewindespindeln (481, 482) gleichzeitig in Drehung versetzt, so dass sie jeweils eine Kugel (401, 402) oder ein Ventil von ihrem oder seinem Sitz (403, 404) anheben oder darauf ablegen können, wobei sich die erste Gewindespindel (481) zu einer ersten Kugel (401) hin bewegt, wenn sich die zweite Gewindespindel (482) von einer zweiten Kugel (402) weg bewegt und umgekehrt, wobei die Kugeln (401, 402) nicht gleichzeitig von ihren Sitzen (403, 404) angehoben werden können.

4. Motor mit variablem Verdichtungsverhältnis nach Anspruch 1, **dadurch gekennzeichnet, dass** der drehende Elektromotor (480) die beiden Gewindespindeln (481, 482) mittels mindestens eines Zahnrads (484), das den Motor mit den Gewindespindeln verbindet, gleichzeitig in Drehung versetzt.

5. Motor mit variablem Verdichtungsverhältnis nach Anspruch 1, **dadurch gekennzeichnet, dass** der drehende Elektromotor (480) die beiden Gewindespindeln (481, 482) mittels mindestens eines Zahnriemens gleichzeitig in Drehung versetzt.

6. Motor mit variablem Verdichtungsverhältnis nach Anspruch 1, **dadurch gekennzeichnet, dass** der drehende Elektromotor (480) die beiden Gewindespindeln (481, 482) mittels mindestens einer Kette gleichzeitig in Drehung versetzt.

7. Motor mit variablem Verdichtungsverhältnis nach Anspruch 1, **dadurch gekennzeichnet, dass** die beiden Gewindespindeln (481, 482) in der gleichen Richtung in Drehung versetzt werden, wobei die erste Gewindespindel eine umgekehrte Steigung zu der zweiten Gewindespindel aufweist.

8. Motor mit variablem Verdichtungsverhältnis nach Anspruch 1, **dadurch gekennzeichnet, dass** die beiden Gewindespindeln (481, 482) gleichzeitig in entgegengesetzter Richtung zueinander in Drehung versetzt werden, wobei die erste Gewindespindel hineingeschraubt wird, während die zweite herausgeschraubt wird und umgekehrt.

9. Motor mit variablem Verdichtungsverhältnis nach Anspruch 1, **dadurch gekennzeichnet, dass** der Zylinderkolben (13) des doppelt wirkenden hydraulischen Steuerzylinders (8) zwei elastische Endanschläge (130, 131) umfasst, die den maximalen Hub des Kolbens bestimmen, wobei mit dem ersten elastischen Anschlag (131) das maximale Verdichtungsverhältnis des Motors mit variablem Verdichtungsverhältnis begrenzt werden kann, wenn er in Kontakt mit dem Kurbelgehäuse (100) des Motors kommt, und mit dem zweiten elastischen Anschlag (130) das minimale Verdichtungsverhältnis des Motors mit variablem Verdichtungsverhältnis begrenzt werden kann, wenn er in Kontakt mit einem Zylinderkopf (300) des Steuerzylinders (8) des Motors kommt.

10. Motor mit variablem Verdichtungsverhältnis nach Anspruch 9, **dadurch gekennzeichnet, dass** der Zylinderkolben (13) des doppelt wirkenden hydraulischen Steuerzylinders (8), der an der Steuerzahnstange (7) befestigt ist, zwischen der unteren Fläche des Kolbens (13) und der unteren Zylinderstange (16) der Steuerzahnstange (7) eine Einstellscheibe (135) umfasst, mit der die Position des Kolbens in Bezug auf die Zahnstange derart eingestellt werden kann, dass das Verdichtungsverhältnis des Motors mit variablem Verdichtungsverhältnis eingestellt werden kann, wenn einer der beiden elastischen Endanschläge (130, 131) im Falle des ersten Anschlags (131) entweder mit dem Kurbelgehäuse (100) des Motors oder im Falle des zweiten Anschlags (130) mit dem Zylinderkopf (300) des Steuerzylinders (8) des Motors in Kontakt kommt.

11. Motor mit variablem Verdichtungsverhältnis nach Anspruch 9, **dadurch gekennzeichnet, dass** der Zylinderkolben (13) einen Kolbenentlüftungskanal (133) umfasst, der die untere Kammer (122) und die obere Kammer (121) des doppelt wirkenden hydraulischen Steuerzylinders (8) verbindet, wobei durch den Kanal Luft, die eine Tasche in der unteren Kammer (122) bilden kann, in die obere Kammer (121) geleitet werden kann.

12. Motor mit variablem Verdichtungsverhältnis nach Anspruch 11, **dadurch gekennzeichnet, dass** der Kolbenentlüftungskanal (133) durch einen Raum gebildet wird, der zwischen dem Zylinderkolben (13) und der Spannspindel (132) gelassen wurde, der so berechnet ist, dass er einen Druckabfall erzeugt, der den Durchfluss der Hydraulikflüssigkeit zwischen der unteren Kammer (122) und der oberen Kammer (121) des doppelt wirkenden hydraulischen Steuerzylinders (8) begrenzt.

13. Motor mit variablem Verdichtungsverhältnis nach Anspruch 11, **dadurch gekennzeichnet, dass** der Kolbenentlüftungskanal (133) des Zylinderkolbens (13) einen erheblichen Raum zwischen dem Zylinderkolben (13) und der Spannspindel (132) umfasst, wobei der Raum Hydraulikflüssigkeit aus der unteren Kammer (122) in die obere Kammer (121) des doppelt wirkenden hydraulischen Steuerzylinders (8) über eine Nut durchlässt, die an der Unterseite einer Entlüftungsscheibe (136) vorgesehen ist, die zwischen der Spannspindel (132) und dem Zylinderkolben (13) eingespannt ist.

14. Motor mit variablem Verdichtungsverhältnis nach Anspruch 13, **dadurch gekennzeichnet, dass** die Nut, die in der Entlüftungsscheibe (136) umfasst ist, spiralförmig ist, so dass sie eine große Länge aufweist, wobei der Anfang der Spirale in das zentrale Loch der Scheibe mündet, während das Ende der Spirale am Umfang der Scheibe mündet.

15. Motor mit variablem Verdichtungsverhältnis nach Anspruch 11, **dadurch gekennzeichnet, dass** der Kolbenentlüftungskanal (133) aus Kapillarentlüftungskanal (134) besteht, der einem im Körper der Spannschraube (132) angeordnet oder eingefügt ist, mit der der Zylinderkolben (13) an der Steuerzahnstange (7) befestigt werden kann, wobei das Profil, der Querschnitt und die Länge des Kapillarkanals (134) so berechnet sind, dass sie einen Druckabfall erzeugen, der den Durchgang von Hydraulikflüssigkeit zwischen der unteren Kammer (122) und der oberen Kammer (121) des Steuerzylinders (8) begrenzt.

16. Motor mit variablem Verdichtungsverhältnis nach Anspruch 1, **dadurch gekennzeichnet, dass** der doppelt wirkende hydraulische Steuerzylinder (8) einen Zylinderentlüftungskanal (137) umfasst, dessen Einlass am höchsten Punkt der oberen Kammer (121) positioniert ist und dessen Auslass an einem beliebigen Punkt des Motors mit variablem Verdichtungsverhältnis mündet, wobei der Zylinderentlüftungskanal (137) mittels eines Magnetentlüftungsventils (138) verschlossen oder geöffnet werden kann.

17. Motor mit variablem Verdichtungsverhältnis nach Anspruch 1, **dadurch gekennzeichnet, dass** die obere Kammer (121) des Steuerzylinders (8) ein Nachfüll-Rückschlagventil (428) umfasst, wobei es das Ventil erlaubt, dass unter Druck stehende Hydraulikflüssigkeit aus dem Hydraulikaggregat (200) des Motors mit variablem Verdichtungsverhältnis in die obere Kammer (121) eintritt, jedoch nicht aus dieser austritt.

18. Motor mit variablem Verdichtungsverhältnis nach Anspruch 1, **dadurch gekennzeichnet, dass** die untere Kammer (122) des Steuerzylinders (8) ein Nachfüll-Rückschlagventil (429) umfasst, wobei es das Ventil erlaubt, dass unter Druck stehende Hydraulikflüssigkeit aus dem Hydraulikaggregat (200) des Motors mit variablem Verdichtungsverhältnis in die untere Kammer (122) eintritt, jedoch nicht aus dieser austritt.

19. Motor mit variablem Verdichtungsverhältnis nach Anspruch 1, **dadurch gekennzeichnet, dass** die Hubvorrichtung mit Kugelgewindegetriebe eine am Zylinderkurbelgehäuse (100) des Motors mit variablem Verdichtungsverhältnis befestigte Platte (460) umfasst, in der der Transferkanal (405) angeordnet ist, wobei die Platte die Hubmittel (410) der Kugeln (401, 402) und die Dichtungsmittel umfasst, die die Dichtheit zwischen dem Transferkanal (405) und den in das Zylinderkurbelgehäuse (100) integrierten Kanälen (406, 407) gewährleisten.

## Claims

1. Variable compression ratio engine comprising a compression ratio adjustment device provided with a screw ball lifting device, said engine comprising a transfer channel (405) connecting an upper chamber (121) and a lower chamber (122) of a double-acting hydraulic control cylinder (8), and at least one cylinder piston (13) fixed to a control rack (7), **characterized in that** the screw ball lifting device comprises:
• at least two balls (401, 402) or valves each resting on a seat (403, 404) and respectively closing off one and the other end of the transfer channel (405) connecting the upper chamber (121) and the lower chamber (122) of the control cylinder (8), said balls (401, 402) acting as a non-return valve when they are held on their seat (403, 404) by a spring (408, 409) in order only allow hydraulic fluid to pass in one direction;
• lifting means (410) consisting of a cylindrical pusher (412) housed in the transfer channel (405) and at least one rotary electric motor (480) provided with an angular sensor, said electric motor (480) ensuring, by means of mechanical transmission means (483), the rotation of at least one screw (481, 482) which makes it possible to maneuver said cylindrical pusher (412) in longitudinal translation so that its end lifts or at least one ball or valve (401, 402) is removed from its seat (403, 404).

2. Variable compression ratio engine according to claim 1, **characterized in that** the ball lifting device comprises at least one compensating non-return valve (411) which allows the hydraulic fluid to leave the transfer channel (405) to return to a hydraulic unit (200) of the variable compression ratio engine containing a pressurized reserve (251) of said fluid, but prevents said fluid from returning to said transfer channel.

3. Variable compression ratio engine according to claim 1, **characterized in that** the rotary electric motor (480) simultaneously rotates two screws (481, 482) which each make it possible to lift or remove from its seat (403, 404) a ball (401, 402) or valve, the first screw (481) going in the direction of a first ball (401) when the second screw (482) moves away from a second ball (402) and vice versa, it not being possible to simultaneously lift said balls (401, 402) from their seats (403, 404).

4. Variable compression ratio engine according to claim 1, **characterized in that** the rotary electric motor (480) simultaneously rotates the two screws (481, 482) by means of at least one toothed wheel (484) connecting said motor to said screw.

5. Variable compression ratio engine according to claim 1, **characterized in that** the rotary electric motor (480) simultaneously rotates the two screws (481, 482) by means of at least one toothed belt.

6. Variable compression ratio engine according to claim 1, **characterized in that** the rotary electric motor (480) simultaneously rotates the two screws (481, 482) by means of at least one chain.

7. Variable compression ratio engine according to claim 1, **characterized in that** the two screws (481, 482) are rotated in the same direction, the first screw having a pitch reversed with respect to that of the second screw.

8. Variable compression ratio engine according to claim 1, **characterized in that** the two screws (481, 482) are simultaneously rotated in opposite directions to each other, the first screw being screwed in while the second is unscrewed and vice versa.

9. Variable compression ratio engine according to claim 1, **characterized in that** the cylinder piston (13) of the double-acting hydraulic control cylinder (8) has two resilient end-of-stroke stops (130, 131) which determine the maximum stroke of said piston, the first resilient stop (131) making it possible to limit the maximum compression ratio of the variable compression ratio engine when it comes into contact with the cylinder crankcase (100) of said engine, the second resilient stop (130) making it possible to limit the minimum compression ratio of the variable compression ratio engine when it comes into contact with a cylinder head (300) of the control cylinder (8) of said engine.

10. Variable compression ratio engine according to claim 9, **characterized in that** the cylinder piston (13) of the double-acting hydraulic control cylinder (8) fixed to the control rack (7) comprises, between the underside of said piston (13) and the lower cylinder rod (16) of the control rack (7), an adjusting washer (135) which makes it possible to adjust the position of said piston with respect to said rack, so as to be able to adjust the compression ratio of the variable compression ratio engine when one or the other of the two resilient end-of-stroke stops (130, 131) comes into contact either with the cylinder crankcase (100) of said engine as regards the first stop (131), or with the cylinder head (300) of the control cylinder (8) of said engine as regards the second stop (130).

11. Variable compression ratio engine according to claim 9, **characterized in that** the cylinder piston (13) has a piston degassing duct (133) which connects the lower chamber (122) and the upper chamber (121) of the double-acting hydraulic control cylinder (8), said duct allowing air that can form a pocket in said lower chamber (122) to pass into said upper chamber (121).

12. Variable compression ratio engine according to claim 11, **characterized in that** the piston degassing duct (133) consists of a space left between the cylinder piston (13) and the clamping screw (132), which space is calculated to form a pressure drop limiting the flow of hydraulic fluid between the lower chamber (122) and the upper chamber (121) of the double-acting hydraulic control cylinder (8).

13. Variable compression ratio engine according to claim 11, **characterized in that** the piston degassing duct (133) of the cylinder piston (13) comprises a large space left between the cylinder piston (13) and the clamping screw (132), said space allowing the hydraulic fluid to pass from the lower chamber (122) to the upper chamber (121) of the double-acting hydraulic control cylinder (8), via a groove made on the underside of a degassing washer (136) clamped between said clamping screw (132) and said cylinder piston (13).

14. Variable compression ratio engine according to claim 13, **characterized in that** the groove in the degassing washer (136) is in the form of a spiral in order to have a long length, the start of said spiral opening into the central hole of said washer, while the end of said spiral opens out at the periphery of said washer.

15. Variable compression ratio engine according to claim 11, **characterized in that** the piston degassing duct (133) consists of a degassing capillary duct (134) which is arranged or attached in the body of the clamping screw (132) and makes it possible to fix the cylinder piston (13) on the control rack (7), the profile, the cross section and the length of said capillary duct (134) being calculated to form a pressure drop limiting the passage of the hydraulic fluid between the lower chamber (122) and the upper chamber (121) of the control cylinder (8).

16. Variable compression ratio engine according to claim 1, **characterized in that** the double-acting hydraulic control cylinder (8) comprises a cylinder degassing duct (137), the inlet of which is positioned at the highest point of the upper chamber (121) and the outlet of which opens at any point of the variable compression ratio engine, said cylinder degassing duct (137) being able to be blocked or opened by means of a degassing solenoid valve (138).

17. Variable compression ratio engine according to claim 1, **characterized in that** the upper chamber (121) of the control cylinder (8) comprises a replenishment non-return valve (428), said valve allowing the pressurized hydraulic fluid from the hydraulic unit (200) of the variable compression ratio engine to enter said upper chamber (121), but not to leave it.

18. Variable compression ratio engine according to claim 1, **characterized in that** the lower chamber (122) of the control cylinder (8) comprises a replenishment non-return valve (429), said valve allowing the pressurized hydraulic fluid from the hydraulic unit (200) of the variable compression ratio engine to enter said lower chamber (122), but not to leave it.

19. Variable compression ratio engine according to claim 1, **characterized in that** the screw ball lifting device comprises a plate (460) attached to the cylinder crankcase (100) of the variable compression ratio engine in which the transfer channel (405) is arranged, said plate comprising the lifting means (410) of the balls (401, 402) and the sealing means which ensure the seal between said transfer channel (405) and the ducts (406, 407) integrated into the cylinder crankcase (100).
